# EUROPEAN PATENT APPLICATION

(11) **EP 3 318 935 A1**
(43) Date of publication of application: **09.05.2018**
(21) Application number: 16002360.2
(22) Date of filing: 08.11.2016
(51) Int. Cl.: G05B 19/042, B01J 19/00

(54) **METHOD OF OPERATING A PROCESS MODULE IN A MODULAR PROCESS PLANT**

(71) Applicant: ABB Schweiz AG, 5400 Baden (CH)
(72) Inventor: Hoernicke, Mario, 76829 Landau (DE); Xu, Chaojun, 68167 Mannheim (DE); Drath, Rainer, 68239 Mannheim (DE); Haller, Axel, 69517 Gorxheimertal (DE)
(74) Representative: Helin, William

(57) **Abstract**

A Method of operating a process module (2.1) in a modular process plant (1) with a plurality of physically interconnected process modules (2.1 to 2.n), wherein each process module (2.1 to 2.n) includes a plurality of physical control objects (3.1 to 3.n) like pumps, drives and control valves which are interconnected to an industrial bus system (4) and are controlled by a central process control system (6) via said industrial bus system (4), with the following method steps:
Mounting a micro controller (8) to one of the process modules (2.1) and connecting physical control objects (3.1 to 3.n) included in said process module (2.1) to said micro controller (8), connecting said micro controller (8) to said industrial bus system (4), powering on said micro controller (8) and physical control objects (3.1 to 3.n) inside said process module (2.1), loading control software (10) to said micro controller (8), said control software including module description data enabling said micro controller (8) to generate a grouped virtual control object (V1.1 to V1.n) from at least two of the physical control objects (3.1 to 3.n) included in said process module (2.1) and controlling said grouped virtual control object (V1.1 to V1.n), generating at least one grouped virtual control object (V1.1 to V1.n) by execut-ing said control software (10) on said micro controller (8) and transmitting object identification data and control parameters for controlling said generated virtual control object (V1.1 to V1.n) to said central process control system (6) by said micro controller (8). The invention is further related to a process module for carrying out the afore described method.

## Description

The invention is related to a method of operating a process module in a modular process plant comprising a plurality of physically interconnected process modules according to the preamble of claim 1.

For controlling large industrial plants as e.g. gas processing facilities or chemical production plants with hundreds of different devices like electric motors, pumps, reactors, motorized valves, sensors etc., which are hereinafter called control objects, industrial control systems are used. The known industrial control systems usually include electric control systems like field bus systems to which the control objects are electrically connected and over which the data for controlling the control objects as well as sensor data is transmitted to a main computer system. The information about the actual state of the physical control objects like the input flow rate of chemical components which are fed to a chemical reactor or the flow rate and opening positions of control vales or the speed and torque of an electric motor, etc. are displayed as stylized objects or digital pictograms on large display screens for each control object or for groups of control objects, in order to give the operators an overview of the active state of the process plant. A method and an associated control system of the aforementioned type are disclosed in WO 2001002953A1.

In contrast to traditional process plants, in which the control objects are fixedly interconnected to each other by installed pipes, tubes, electric power lines and data cables, modular process plants are assemblies of more or less independent process modules which are interconnected with each other by flexible hoses and electric cables which can be plugged into associated sockets arranged at each module. Accordingly, compared to worldscale plants, modular plants are more flexible and are more often reconfigured, in order to change the production process from a first substance to a second substance. In view of this high flexibility, modular process plants are e.g. used for producing pharmaceutical substances.

However, one problem which arises when reconfiguring a modular process plant for producing a differend type of product can be seen in that not only the process modules have to be physically rearranged in a new configuration, but also the control software for controlling the control objects in each process module has to be significantly reconfigured and adapted to the new module configuration, in order to control each of the control objects included in the rearranged process modules in such a way that the new product or substance is produced with the required quantity and quality. As the control objects included in each of the prior art process modules are all controlled by a the central process control system via a known industrial bus system, like a MOD-Bus or LON-Bus or an Ethernet - TCP-IP based bus system as it is disclosed in EP 1611 713 A1, a rearrangement of the process modules with the included control objects usually requires a complete redesign of the control code which is executed by the central process control system when running the new module configuration.

In case of process modules of the aforementioned type which only include control objects that are directly controlled by a central control system without having any internal intelligence, the generation of the new control code requires a complete new programming of the code with a holistic view of the engineer on the entire plant. Additionally, the interlocks, closed-loop control and glue logic inside each module has to be implemented using a standard controller and therefore needs to be tightly interconnected with the rest of the plant.

Accordingly, it is an object of the present invention to provide a method of operating a process module in a modular process plant which allows for a faster reconfiguration of the modular process plant and which reduces the effort needed to generate control code which is required to control the control objects included in the process module.

This problem is solved by a method comprising the features as claimed in claim 1.

Further objects of the present invention are included in the dependent claims.

According to the invention, a method of operating a process module in a modular process plant having a plurality of physically interconnected process modules, each of which including a plurality of physical control objects like pumps, drives and control valves which are interconnected to an industrial bus system and are controlled by a central process control system via said industrial bus system, is characterized by the following method steps:
- Mounting a micro controller to at least one of the process modules and connecting two or more of the physical control objects included in said process module to the micro controller,
- connecting the micro controller to the industrial bus system,
- powering on the micro controller and the physical control objects inside the process module,
- loading control software to the micro controller which includes module description data that enables the micro controller to generate a grouped virtual control object from at least two of the physical control objects which are included in the process module and which also enables the micro controller to control the generated grouped virtual control object,
- generating at least one grouped virtual control object by executing said control software on said micro controller and
- transmitting object identification data and control parameters for controlling the generated virtual control object to the central process control system by means of the micro controller.

In other words, it is an object of the present invention to empower functional units (e.g. process modules) that do not contain any intelligence today, by using hardware plug-ins with more intelligence. In order to upgrade the modules with more intelligence, the following steps are done:
The micro controller which is herein after also called upgrade kit, is manually inserted into the module. Then the engineer connects the cabling inside the module and the field bus connection to the (central) process control system. Once the upgrade kit is powered on, the module descriptions are read. The place where the module descriptions are stored might be an USB Stick or other mass storage device, the process control system or the cloud if the upgrade kit (micro controller) comprises a wireless LAN (wifi) or LAN or other interface. After reading the descriptions of the module that might be for example cause & effect matrixes, piping and instrumentation diagrams, state-based control algorithm, etc., the upgrade kit is able to generate the required control code including the interlocks, closed-loop control and glue logic for the automation of the module. Within the description, the connections (signal channels of the module) can be described, as well. Thus, the upgrade kit can provide an automatic marshalling of the signals on the build-in I/Os. Additionally, the upgrade kit (micro controller) knows to which physical control object (equipment of the module) the signals belong and can automatically group the signals. Afterwards, it can aggregate the signals based on object types of the equipment that is inside the module and communicate the signals as virtual control objects (bundles of signals that belong to the same equipment) to the central process control system. From the process control system point of view this can be considered as an objectification interface for the normal signals.

The invention provides for the advantage that the engineering work which is required for a new configuration of a modular process plant is considerably reduced and the flexibility of each process module which is operated according to the method is increased, because the process modules are converted to modules which can be run autarkically by means of the control functions which are associated to the respective module by means of the proposed method.

The upgrade kit furthermore can also enable a process module to store data locally. It may have sufficient memory that can be used to store real-time data which is generated by the physical control objects during the operation of the process plant. Depending on the implementation of the process control system, the data is read from the module in defined time slices and stored in the historians.

The upgrade kit finally makes the module capable of new communication methods. It might also have an open platform communications unified architecture (OPC-UA) interface that can be used to read and write objects inside a module from the process control system (or any other system that has access to the plant). This interface can forward the signals in the object oriented manner, as will be described in more detail hereinafter.

Additionally, the upgrade kit (mirco controller) might have an interface to connect with an industrie 4.0 network, so that if it is required and necessary, the module can communicate with other Industrie 4.0 capable systems.

According to a further aspect of the subject invention, the micro controller may comprise or maybe connected to an object oriented communication interface which is in data communication with the central process control system and which enables the micro controller to transmit object and control parameters of at least one physical control object and/or at least one grouped virtual control object within a process module to the central process control system. By using an object oriented communication interface the complexity and the amount of the data which is exchanged between the micro controller and the central process control system are significantly reduced. This in turn leads to a considerable decrease in the data which has to be transmitted via the industrial bus system in order to control the process module.

In an exemplary embodiment of the present invention, the industrial bus system is a known field bus, like ProfiNet or another known industrial field bus, which is preferably a self-configuring, i.e. an Ethernet-based bus, which is herein after called industrial bus system. The central process control system includes control software which is adapted to detect and directly control a detected grouped virtual control object on basis of control parameters associated with said virtual control object.

This provides for the advantage that only the control parameters of the virtual control object can be addressed by the central control system, whereas the control parameters which are associated with each of the physical control objects in a subject process module are not transferred to the central process control system via the industrial bus, but are solely transferred between the physical control object and the micro controller of the process module to which they are electrically connected.

Moreover, in the aforementioned embodiment of the invention, the central process control system preferably generates a unique identification code when it detects a grouped virtual control object after connecting a process module to the industrial bus system which is modified in the way described herein before and operated according to the present invention. In this case, the central process control system assigns the unique identification code to the micro controller and/or to the detected grouped virtual control object. This provides for the advantage that in the central process control system object oriented control code can be used for controlling the virtual control object or even the process module on basis of the identification code.

According to a further object of the present invention the control software is stored in the central process control system, e.g. in a memory which is included in or connected to the central control system and downloaded to the microcontroller from the central process control system via the industrial bus system. This provides for the advantage, that the initialization of a process module in a new configuration of a modular process plant can be done centrally for all process modules after physically connecting them to the new plant configuration.

According to yet another aspect of the present invention, the micro controller may be connected to an electronic hardware interface which is adapted to receive data from an external storage device and/or from a communication network. As a further alternative embodiment, the control software can be stored on an external storage device and downloaded from the external storage device after connecting the storage device to the electronic hardware interface. In a preferred embodiment of the invention, the hardware interface can be a USB - Interface or any other prior art interface which is used for connecting external storage devices, like external hard disk drives, to a computer system. The usage of an external storage device provides for the advantage that in a modular process plant which is composed of a plurality of conventional non-intelligent process modules, a process module can easily and intuitively be manually fed with the control software for generating a desired virtual control object by an operator. By this, the down time for replacing a process module in case of a defect can be reduced, because it is not necessary to connect a new process module having a new micro controller with no control code implemented therein to the industrial bus system.

In another preferred embodiment of the invention, the micro controller after generating a grouped virtual control object which includes at least two physical control objects, generates and transmits an inactive-status signal for each of the physical control objects included in the grouped virtual control object over the bus system to the central process control system. This provides for the advantage that the virtual control objects can be easily reconfigured like plug and play components known from personal computer systems, while the process module with the included physical control objects and the micro controller are still powered on and connected to the industrial bus system.

According to yet another object of the present invention, the module description data includes cause and effect matrixes and/or piping and instrument diagrams and/or state-based control routines, and the control software loaded to the micro controller may further include software for generating control code for the grouped virtual control object. The micro controller preferably executes this control software and thereby generates the specific control code which is needed to control the grouped virtual control object to perform the desired new functions which are associated to the reconfigured process module. By this, the need for separately generating the control code on a separate computer system and transferring the generated code to the micro controller of the correct process module is eliminated, which significantly eases the logistics required when modifying modular process plants having a plurality of process modules which are to be operated according to the present invention.

In the preferred embodiment of the invention, the control code includes interlocks of the physical control objects which are included in the grouped virtual control object. Moreover, the control code may additionally or optionally also include closed loop control routines for controlling the physical control objects used for running a grouped virtual control object and/or the glue-logic routines which are required for the automation of the process module including the grouped virtual control object.

According to yet another aspect of the subject invention each of the physical control objects included in a process module to be modified comprises an I/O-interface. The I/O-interface is connected to the micro controller and generates communication signals which are transmitted to the micro controller. The micro controller is adapted to receive and analyze the signals that are generated by the I/O-interfaces and is also configured to aggregate the communications signals received from at least two of the I/O-interfaces to a grouped communication signal. According to another aspect of the present invention, the micro controller generates a grouped virtual control object from this grouped communication signal, which is afterwards transmitted via the industrial bus system to the central process control system for further processing.

According to a further embodiment of the present invention the micro controller may aggregate the communication signals of all physical control objects which are included in a process module to be modified to a virtual process module object. This virtual process module object is afterward transmitted by the micro controller together with associated control parameters for controlling the virtual process module via the industrial bus system to the central process control system. This way of an object oriented handling of not only some of the physical control objects inside a process module, but even of the entire module itself results in a significant reduction of data which has to be transferred over the industrial bus system when running a modular process plant having a plurality of modified process modules e.g. 10 or 50 or even more modules. Moreover, this embodiment also allows for a much more efficient programming of the control code which has to be implemented in the central process control system.

According to a further aspect of the present invention, a process module for carrying out the aforementioned method comprises a plurality of physical control objects like pumps, drives and control valves, and a micro controller. The micro controller is electrically connected to the physical control objects and is adapted to be connected to and controlled by a central process control system via an industrial bus system. The micro controller further comprises an object oriented communication interface which is connected to the micro controller or which is included in the electronic hardware of the micro controller for downloading control software including module description data to the micro controller.

The micro controller is adapted to process the control software and generate a grouped virtual control object from at least two of the physical control objects. After generating the grouped virtual control object the micro controller transmits object identification data and control parameters for controlling the generated grouped virtual control object to the central process control system via the object oriented communication interface.

The invention is hereinafter described with reference to the accompanying drawings. In the drawings
- Fig. 1: is an overview of a modular process plant with 5 exemplary process modules for producing a final product C from products A and B,
- Fig. 2a: is a schematic view of a process module of the modular process plant of Fig. 1 for producing the final product C before modifying the same according of the present invention,
- Fig. 2b: is a schematic view of the process module of Fig. 2a after disconnecting the physical control objects from the central control system, mounting the micro controller to the module and connecting the physical control objects to the micro controller,
- Fig. 2c: is a schematic view of the process module of Fig. 2b before downloading the control code to the micro controller for generating three grouped virtual control objects from the physical control objects in the module,
- Fig. 2d: is a schematic view of the process module of Fig. 2c while downloading the control code to the micro controller, and
- Fig. 2e: is a schematic view of the process module of Fig. 2c after executing the downloaded control code for generating three virtual control objects and connecting the module to the industrial bus system and uploading the virtual control objects to the central processing unit.

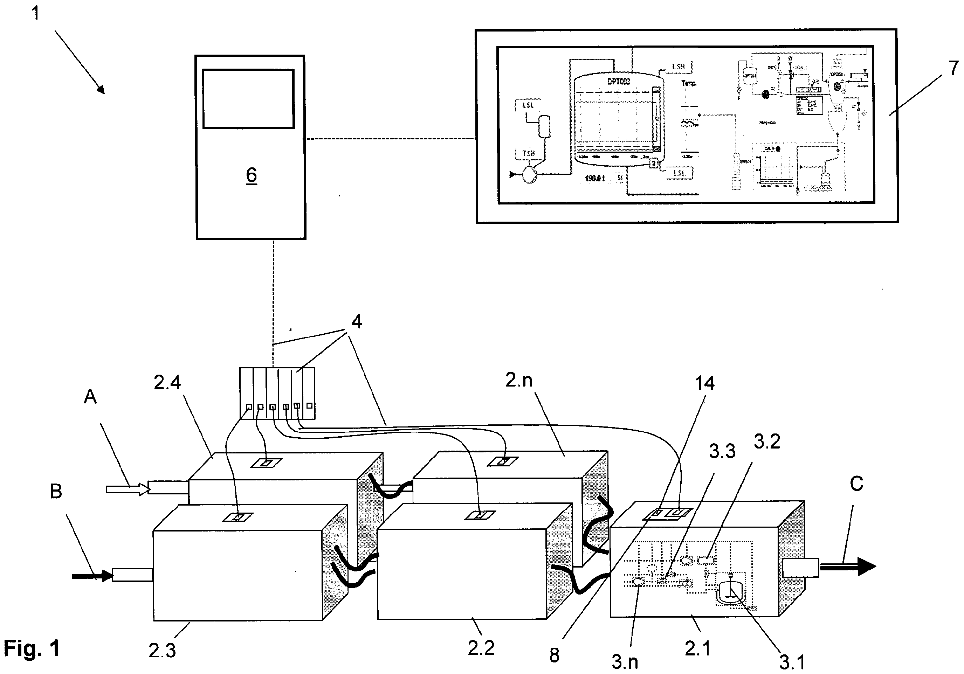

As it is shown in Figs. 1 a modular process plant 1 comprises a plurality of process modules 2.1 to 2.n which are interconnected by flexible pipes or hoses and electrical wiring (not shown), in order to produce a new substance C from two substances A and B, which are fed to the process module 2.3 and 2.4. As can be further seen from Fig. 1, each process module 2.1 to 2.n includes a plurality of physical control objects, like pumps, drives and control valves as they are schematically indicated by exemplary physical control objects 3.1 to 3.n for process module 2.1 in Fig. 1.

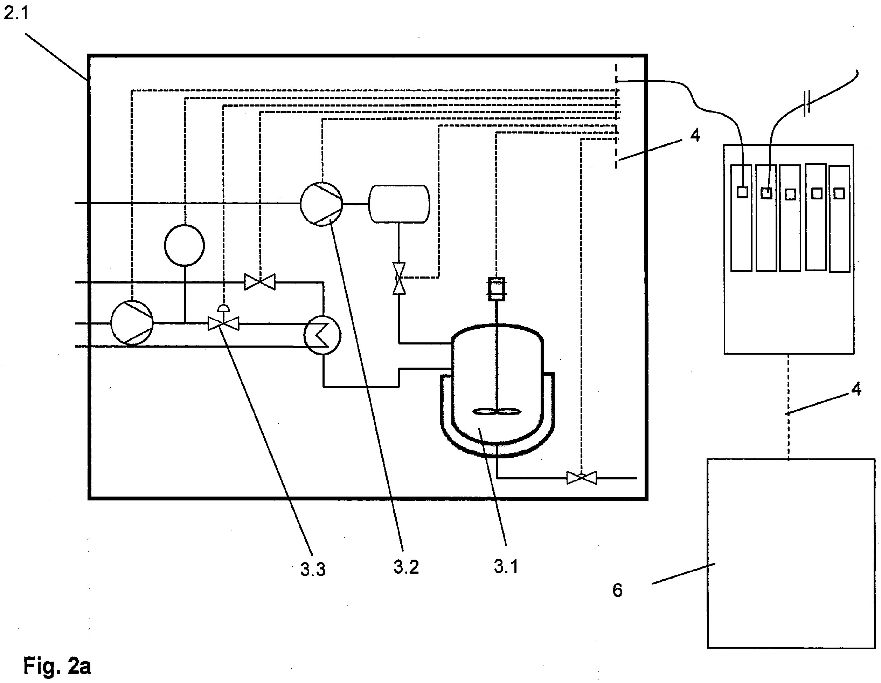

As it can be seen from Fig. 2a, each of the physical control objects 3 in each of the process modules 2.1 to 2.n is connected to an industrial bus system 4 and controlled by a central process control system 6 via the industrial bus system 4. In process module 2.1 shown in Fig. 2a, the exemplary control objects 3.1, 3.2 and 3.3 are connected to the fieldbus extension of the industrial bus system 4 inside the module which is indicated by a dashed line. The operation parameters of the physical control objects 3 in the process modules 2.1 to 2.n, like the actual control parameters, volume flow, output of substances, positions of valves, speed of electric drives and pumps etc. are transferred to the central process control system 6 and are there preferably displayed on an operator screen display 7 which is connected to the central process control system 6, as it is shown in Fig. 1.

According to the invention, the method of operating a process module in a modular process plant will now be described with reference to exemplary process module 2.1 of Fig. 1 which outputs the final product C produced from substances A and B fed to modules 2.3 and 2.4 of Fig. 1.

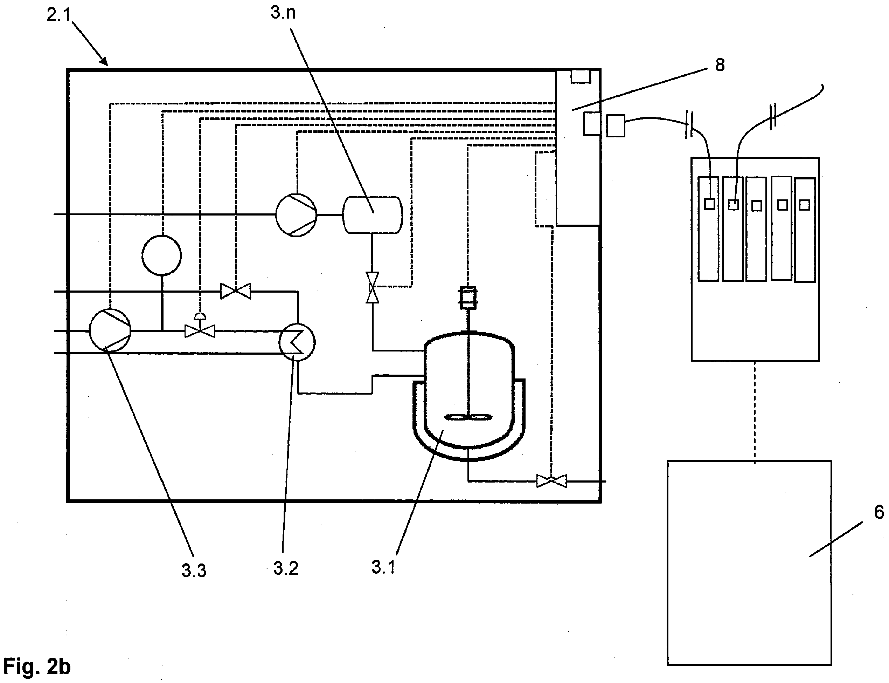

As shown in Fig. 2b, a micro controller 8 is attached to process module 2.1 and the physical control objects 3.1 to 3.n included in process module 2.1 shown in Fig. 2a are disconnected from the central process control system 6 or vice versa. If the modules are not directly wired to the central process control system 6, but are connected to this by a known industrial bus system, which is hereinafter also called a fieldbus system as shown in Fig. 2a, this can be achieved by removing the connection to the extension of the industrial bus 4 inside module 2.1 in Fig. 2a.

According to Fig. 2b, each of the physical control objects 3. 1 to 3.n inside the process module 3.1 is electrically connected to the micro controller 8 for data transmission between the control object 3.1 to 3.n and the micro controller 8. To do this, the physical control objects may include driver interfaces and controllers (not shown) which provide the electric power for driving the physical control object if required. In this case only the driver interfaces which hereinafter are considered to be a part of the physical control objects, are connected to the micro controller 8 for the transmission of control data or control signals.

As a next step, the micro controller 8 is connected to the industrial bus system 4 and the micro controller and the physical control objects 3.1 to 3.n inside the process module 2.1 are connected to the electric power supply (not shown) and powered on.

After powering on the process module 3.1 with the attached micro controller 8, control software 10 is loaded to said micro controller 8 which includes module description data that enables the micro controller 8 to generate a grouped virtual control object V1.1 to V1.n from at least two of the physical control objects 3.1 to 3.n inside the process module 2.1. The control software enables the micro controller 8 to control the grouped virtual control object V1.1 to V1.n.

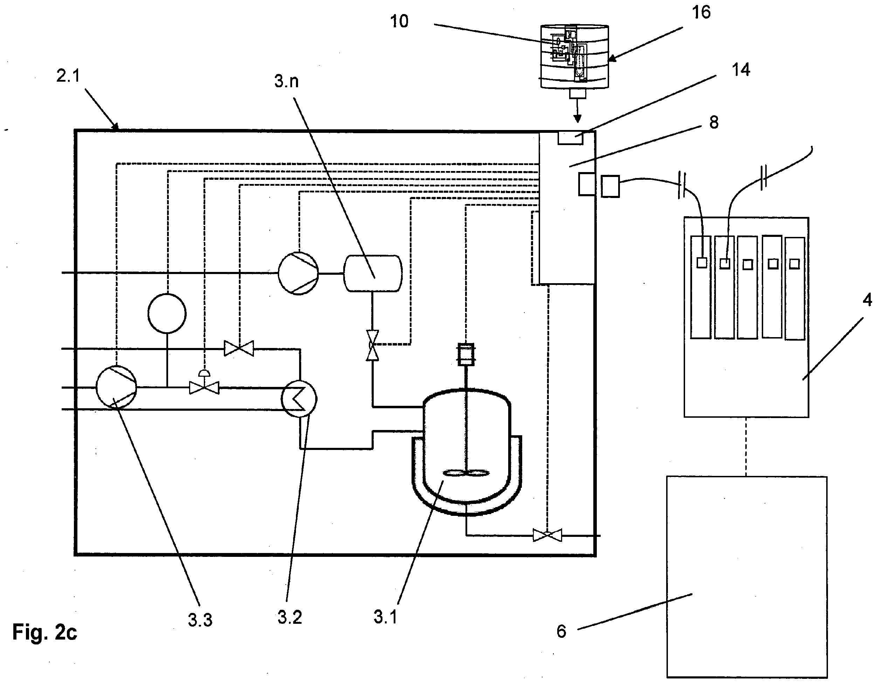

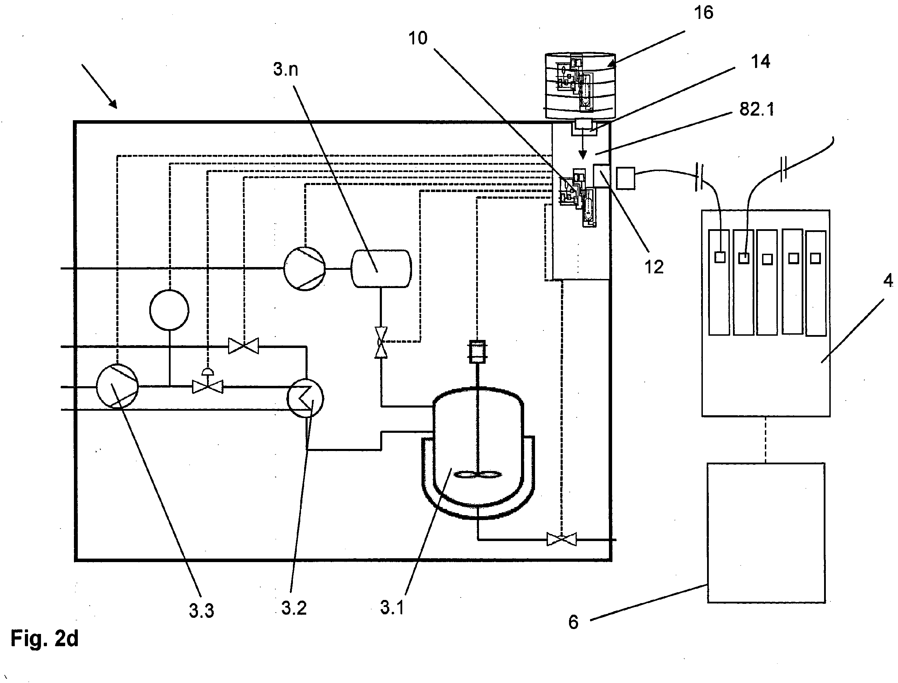

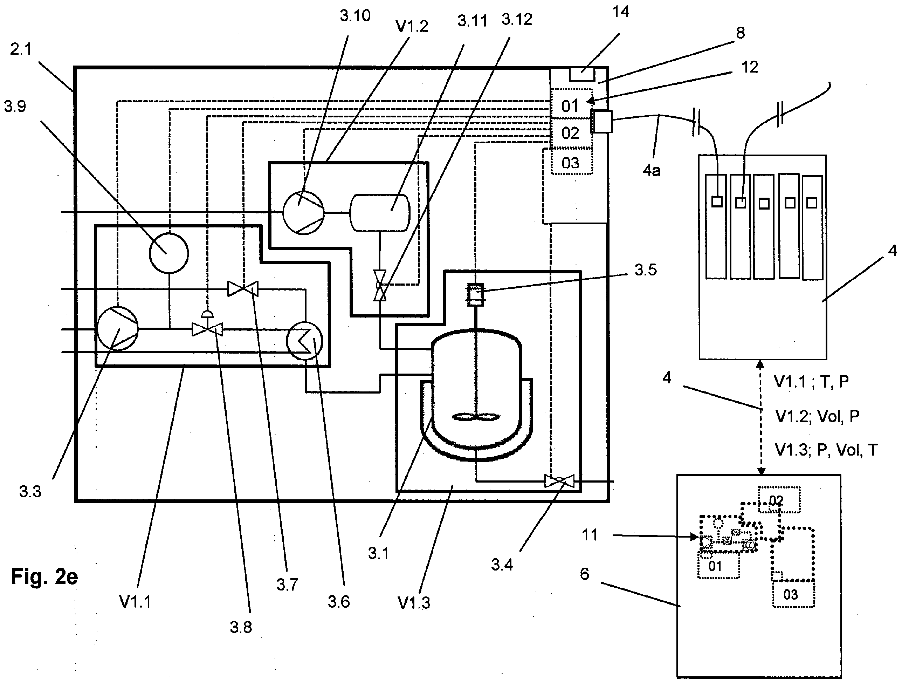

As it can be seen from Fig. 2c and 2d, the micro controller 8 is connected to an electronic hardware interface 14, like an USB (universal serial bus) interface which is adapted to receive data from an external storage device 16 on which the control software 10 is stored and which is plugged into the electronic hardware interface 14, as it is shown in Fig. 2d. The control software, which is symbolically indicated in the storage device 16 of Fig. 2d and 2e is preferably automatically downloaded from the storage 16 device after connecting it to the electronic hardware interface 14.

After the download of the control software 10 is completed, the control software is executed by the micro controller 8 and at least one grouped virtual control object V1.1 to V1.n is generated by the control software 10 inside the micro controller 8. In the embodiment illustrated in Fig. 2e, a first virtual control object V1.1 is generated from physical control objects 3.1, 3.4 and 3.5. A second virtual control object V1.2 is generated from physical control objects 3.10, 3.11 and 3.12, and a third virtual control object V1.3 is generated from physical control objects 3.3, 3.6, 3.7, 3.8 and 3.9.

For generating the grouped virtual control objects, each of said physical control objects 3.1 to 3.12 comprises an I/O-interface (not shown), which is connected to the micro controller 8 and which generates communication signals. The communication signals are transmitted to and received from the micro controller 8, and the micro controller recognizes the communication signals generated by said I/O-interfaces and aggregates the communications signals of the I/O-interfaces of two or more physical control objects 3 to a grouped communication signal. This grouped communication signal is afterwards assigned to the associated grouped virtual control object V1.1 to V1.3.

As it is further schematically indicated in Fig. 2e, the micro controller 8 comprises or is connected to an object oriented communication interface 12 which is in data communication with the central process control system 6. The object oriented communication interface 12 enables the micro controller 8 to transmit object identification data and control parameters of the generated virtual control objects V1.1 to V1.3 via the industrial bus system 4, to the central process control system 6, after connecting the industrial bus system 4 to the object oriented communication interface, as it is indicated by the plug connected to bus cable 4a in Fig. 2e.

For generating the virtual control objects, the control code 10 includes interlocks of the physical control objects 3.1 to 3.12 which are included in the grouped virtual control object V1.1 to V1.3 and associated closed loop control routines for controlling the physical control objects. Moreover, the control code 10 may additionally comprise glue-logic routines for the automation of the entire process module 2.1 which includes the grouped virtual control objects V1.1 to V1.3.

After the virtual control objects has been generated by the micro controller 8, object identification data together with the associated control parameters for controlling the generated virtual control object V1.1 to V1.3 are transferred to the central process control system, as it is indicated in the exemplary embodiment of Fig. 2e, where for virtual control object V1.1, the control parameters temperature T and Pressure P are transmitted, for virtual process module V1.2, the control parameters volume flow Vol and Pressure P, and for virtual process module V1.3 pressure P, volume flow Vol and temperature T are transferred via the bus system 4.

The industrial bus system 4 is preferably a self-configuring bus system and the central process control system 6 includes control software 11 which is adapted to detect and directly control a detected grouped virtual control object V1.1, V1.2 or V1.3 on basis of the transmitted control parameters P, T, Vol and others which are associated with each grouped virtual control object V1.1 to V1.3. The control software 11 is symbolically indicated in Fig. 2e for matters of understanding only.

When detecting a grouped virtual control object V1.1, V1.2 and V1.3, the central process control system 6 generates a unique identification code and assigns this unique identification code to the micro controller 8 or alternatively to the detected grouped virtual control object V1.1, V1.2 and V1.3 for the further processing.

### List of reference numerals

- 1: Modular process plant
- 2.1 -2.n: process modules
- 3.1 - 3.n: physical control objects
- 4: industrial bus system/field bus
- 4a: bus cable
- 6: central process control system
- 8: micro controller
- 10: control software
- 11: control software running on central process control system
- 12: object oriented com. Interface
- 14: electronic hardware interface
- 16: external storage device
- V1.1 to V1.n: grouped virtual control objects

## Claims

1. Method of operating a process module (2.1) in a modular process plant (1) with a plurality of physically interconnected process modules (2.1 to 2.n), wherein each process module (2.1 to 2.n) includes a plurality of physical control objects (3.1 to 3.n) like pumps, drives and control valves which are interconnected to an industrial bus system (4) and are controlled by a central process control system (6) via said industrial bus system (4),
**characterized by** the following method steps:
mounting a micro controller (8) to one of the process modules (2.1) and connecting physical control objects (3.1 to 3.n) included in said process module (2.1) to said micro controller (8),
connecting said micro controller (8) to said industrial bus system (4),
powering on said micro controller (8) and physical control objects (3.1 to 3.n) inside said process module (2.1),
loading control software (10) to said micro controller (8), said control software including module description data enabling said micro controller (8) to generate a grouped virtual control object (V1.1 to V1.n) from at least two of the physical control objects (3.1 to 3.n) included in said process module (2.1) and controlling said grouped virtual control object (V1.1 to V1.n),
generating at least one grouped virtual control object (V1.1 to V1.n) by executing said control software (10) on said micro controller (8) and
transmitting object identification data and control parameters for controlling said generated virtual control object (V1.1 to V1.n) to said central process control system (6) by said micro controller (8).

2. Method of claim 1,
**characterized in that**
said micro controller (8) comprises or is connected to an object oriented communication interface (12) which is in data communication with said central process control system (6) and which enables said micro controller (8) to transmit object identification data and control parameters of at least one physical control object (3.1 to 3.n) and/or at least one grouped virtual control object (V1.1 to V1.n) within a process module (2.1 to 2.n) to said central process control system (6).

3. Method of claim 1 or 2,
**characterized in that**
the industrial bus system (4) is a self-configuring bus system, and that the central process control system (6) includes control software which is adapted to detect and directly control a detected grouped virtual control object (V1.1 to V1.n) on basis of control parameters associated with said grouped virtual control object (V1.1 to V1.n).

4. Method as claimed in claim 3,
**characterized in that**
said central process control system (6) upon detecting said grouped virtual control object (V1.1 to V1.n) generates a unique identification code and assigns said unique identification code to said micro controller (8) and/or to said detected grouped virtual control object (V1.1 to V1.n).

5. Method as claimed in any of the preceding claims,
**characterized in that**
said control software is stored in said central process control system (6) and downloaded to said microcontroller (8) from said central process control system (6) via said industrial bus system (4).

6. Method as claimed in claims 1 to 5,
**characterized in that**
said micro controller (8) is connected to an electronic hardware interface (14) which is adapted to receive data from an external storage (16) device and/or from a communication network, and that said control software is stored on an external storage device (16) and downloaded from said storage (16) device after connecting said storage device (16) to said electronic hardware interface (14).

7. Method of any of the preceding claims,
**characterized in that**
after generating a grouped virtual control object (V1.1 to V1.n) including two or more physical control objects (3.1 to 3.n), said micro controller generates and transmits an inactive-status signal for each of the physical control objects (3.1 to 3.n) included in the grouped virtual control object (V1.1 to V1.n) over said industrial bus system (4) to said central process control system (6).

8. Method of any of the preceding claims,
**characterized in that**
said module description data includes cause and effect matrixes and/or piping and instrument diagrams, state-based control routines.

9. Method of any of the preceding claims,
**characterized in that**
said control software loaded to said micro controller (8) further includes software for generating control code for said grouped virtual control object (V1.1 to V1.n) and that said micro controller (8) further generates and executes said control code for controlling said generated grouped virtual control object (V1.1 to V1.n).

10. Method of claim 9,
**characterized in that**
said control code includes interlocks of the physical control objects (3.1 to 3.n) included in the grouped virtual control object (V1.1 to V1.n) and/or closed loop control routines for controlling said physical control objects (3.1 to 3.n) included in said grouped virtual control object (V1.1 to V1.n) and/or glue-logic routines for the automation of said process module (2.1) including said grouped virtual control object (3.1 to 3.n).

11. Method of any of the preceding claims,
**characterized in that**
each of said physical control objects (3.1 to 3.n) included in said process module (2.1) comprises an I/O-interface, said I/O-interface being connected to said micro controller (8) and generating communication signals which are transmitted to and received from said micro controller (8), said micro controller being adapted to recognize said communication signals generated by said I/O-interfaces and aggregate communications signals of at least two I/O-interfaces to a grouped communication signal and transmit said grouped communication signal as a grouped virtual control object (V1.1 to V1.n) to said central process control system (6).

12. Method of claim 11,
**characterized in that**
said micro controller (8) aggregates the communication signals of all physical control objects (3.1 to 3.n) included in said process module (2.1) to a virtual process module object (VM) which is transmitted by said micro controller (8) together with associated control parameters for controlling said virtual process module (VM) to said central process control system via said industrial bus system (4).

13. Process module (2.1 to 2.n) for carrying out the method according to any of the preceding claims comprising a plurality of physical control objects (3.1 to 3.n) like pumps, drives and control valves,
a micro controller (8) which is adapted to be connected to and controlled by a central process control system (6) via an industrial bus system (4), said micro controller (8) being electrically connected to said physical control objects (3.1 to 3.n),
an object oriented communication interface (12) connected to or included in said micro controller (8) for downloading control software including module description data to said micro controller (8),
wherein said micro controller (8) is further adapted to process said control software and generate a grouped virtual control object (V1.1 to V1.n) from at least two of the physical control objects (3.1 to 3.n) and transmit object identification data and control parameters for controlling said generated grouped virtual control object (V1.1 to V1.n) to said central process control system over said object oriented communication interface.
